# EUROPEAN PATENT APPLICATION

(11) **EP 1 616 749 A2**
(43) Date of publication of application: **18.01.2006**
(21) Application number: 05380154.4
(22) Date of filing: 12.07.2005
(51) Int. Cl.: B60N 2/66, B60N 2/70

(54) **Seat for automotive vehicles**

(30) Priority: 13.07.2004 ES 200401705 U
(71) Applicant: Seat, S.A., 08040 Barcelona (ES)
(72) Inventor: Alonso Berrar, Armando, 08760 Martorell Barcelona (ES); Perez Herrera, Jesus, 08760 Martorell Barcelona (ES)
(74) Representative: Carvajal y Urquijo, Isabel

(57) **Abstract**

The invention relates to a seat for automotive vehicles incorporating in the upper part of the framework of the backrest an independent transverse rod bent in a C-shape, the side branches of which symmetrically extend outwards into sections forming with the branch a bend of about 180°, being finished in respective end hooks through which the rod is connected to the longitudinal sides of the frame, whereas the bends serve for anchoring the upper part of the piano strings intended for maintaining the shape of the backrest, so that the elasticity of the rod is joined with said strings in order to recover the shape of the backrest after having been deformed by pressure.

## Description

This invention refers to a seat for automotive vehicles comprising a seat body and a backrest body, both linked by means of a mechanism allowing adjusting the angle formed by both components.

In traditional seats the seat body and the backrest body are formed by a frame structure providing the suitable height of the cushion so that the occupant sits with optimal comfort and the backrest body incorporates an anatomically moulded cushion which must provide good support to the vehicle driver. Each one of the seat bodies is basically made up of four different parts, a rod-based semi-rigid framework, a rigid structure which can be coupled to the framework which supports the stresses and collisions and basically shapes the seat contour and is coupled to the framework, an elastically deformable body made from high density foam and a cover covering the body.

The cover on the backrest body has a plastic sheath sewn in the front seam, through which a piano string of variable length, according to the type of seat, is passed. The piano string is fixed at its upper ends to the framework, whereas at the lower portion the string is fastened to an opening located in the lower portion of the rigid portion of the backrest body. The aforementioned sheath is made to coincide with a grooving in the elastically deformable foam body, thus defining the final shape of the seat.

Automotive vehicle seats currently have finishing and ageing problems due to the pressure exerted by the body of the occupant on the cushions of the seat and backrest bodies. These finishing problems appear in the loss of upholstery tension, creating creases in the upper portion of the backrest. This is because when the seat is new, the foam forming the elastically deformable body is sufficiently rigid so as to keep its original shape, but with time the foam loses consistency, giving rise to unpleasant creases, unpleasant both aesthetically and ergonomically. These creases occur because there is no element in the framework forcing it to keep its original state.

The object of the present invention is to provide the backrest body of automotive vehicle seats with means preventing the occurrence of said creases, constantly keeping the upholstery in a taut situation.

This objective is achieved according to the present invention by including in the framework means for connecting the ends of the piano string assuring tautness thereof and thus tautening of the upholstery.

Said means are made up of a rod fixed to the framework in a transverse position which will have certain flexibility so that it can be inserted in said framework and hold the piano string, further allowing the use of a single size of piano string which will adjust to any type of vehicle seat, whatever its configuration, thus standardising the seat covers. Furthermore, due to its special configuration, said rod creates a pressure in the elastically deformable foam body which is in contact with the seath, preventing the formation of creases.

According to the present invention, the framework has assembled on its upper portion an independent transverse rod bent in a C-shape. The side branches of this C symmetrically extend outwards in sections forming a bend of about 180° with said branches, said sections further being finished in end hooks. Both said bends and the end hooks are coplanar with the C-shape.

The rod is connected to the longitudinal sides of the frame of the framework through the end hooks, whereas the ends of the piano string are connected to the bends of both branches.

When the rod is assembled on the frame it will remain with the bends practically against the rods of said framework. When the user leans back on the backrest the piano string will tauten and pull the rod bends due to the pressure exerted on the backrest, being able to elastically swing a certain amount in order to act as an elastic element assuring the tension of the piano string which will in turn act on the elastically deformable foam-based backrest body, keeping the upholstery taut at all times.

Due to the flexibility of the rod, its assembly between the longitudinal sides of the frame will not present any problems, aiding the connection of the end hooks on said sides. Furthermore, since the rod has the shape described, the elastic swinging it undergoes due to pulling by the piano string creates pressure in the foam which is in contact with the cover and does not allow creases to be formed.

With the aim of better understanding the features of the invention a more detailed description thereof is made below, with the aid of the attached figures, in which a non-limiting embodiment example is shown.

In the drawings:
Figure 1 shows a plan view of the separated components of a seat backrest, formed according to the invention.
Figure 2 shows a front elevational view of the framework of the backrest of Figure 1, including the independent rod to which the upper ends of the piano string are connected.
Figure 3 shows a plan view of the rod assembled on the upper portion of the framework.
Figure 4 shows a front elevational view of the elastically deformable body made from high density foam which is part of the backrest.
Figure 5 shows a partially sectioned perspective view of a detail of the connection of one of the ends of the piano string on the rod assembled on the backrest framework.

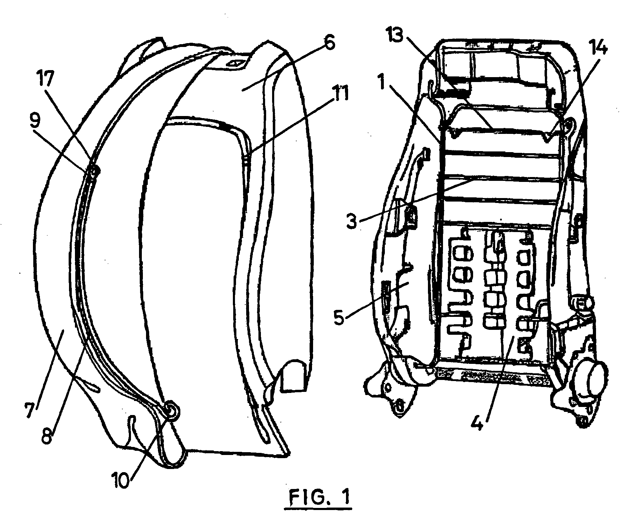

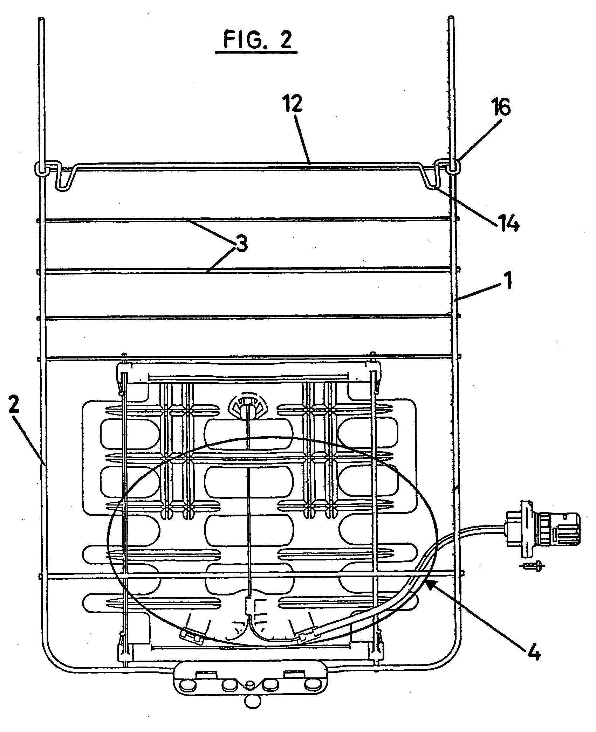

The backrest shown in Figure 1 comprises a framework 1 of a generally planar configuration, based on flexible rods joined such that they form a grid, called "pullmaflex", which is shown in more detail in Figure 2 and which is formed by an open frame 2 between the longitudinal sides of which the flexible rods 3 are assembled. The lumbar support 4 will be assembled on this framework or grid, as well as other traditional backrest elements or components. Assembled on this framework there is a rigid structure 5 which will support the stresses and impacts and basically defines the backrest contour. An elastically deformable body 6 covered by the cover or upholstery 7 is arranged on this structure. This cover or upholstery 7 has two longitudinal sheaths 8 fixed on its inner surface, for example in the front seams, through which a piano string 9 passes. The piano string may be divided into two sections, each of which passes through one of the sheaths 8, being anchored at the lower end 10 to an opening located in the lower portion of the rigid body 5.

The elastically deformable body 6 has on its front surface a grooving 11 over which the sheath 8 will pass when tautly coupling the cover 7 on the body 6.

Figure 4 shows a front elevational view of the elastically deformable body 6 with the grooving 11 in which the sheath 8 will be adjusted.

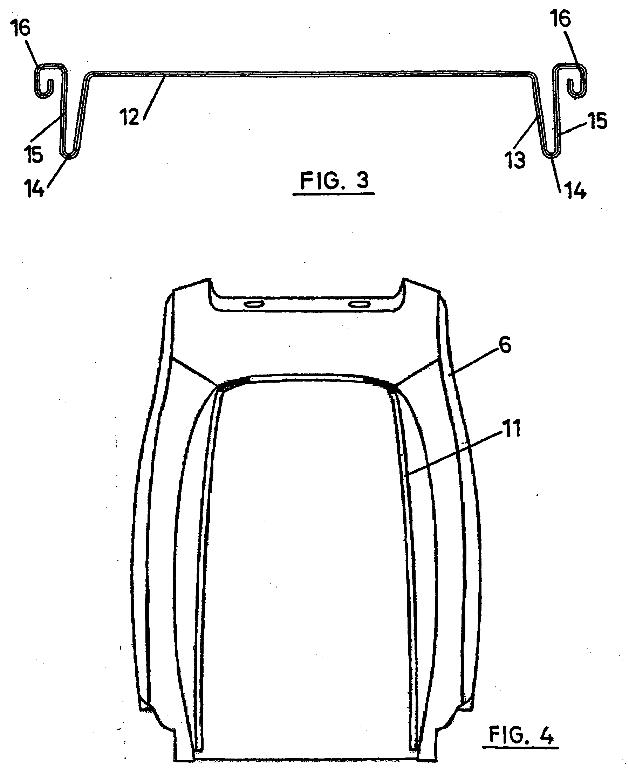

According to the present invention an independent transverse rod 12 is assembled on the framework or grid 1 which, as can best be seen in Figure 3, adopts a C-shape, the side branches 13 of which extend from approximately 180° bends 14 into sections 15 finished in an end hook 16, adopting a symmetrical configuration in which the bends 14, sections 15 and hooks 16 are coplanar with the C-shape 12.

With this configuration, the rod 12 is assembled on the framework 1 by means of the hooks 16 which are coupled on the longitudinal sides of the frame 2 of the framework, the rod thus being against the plane defined by the framework 1.

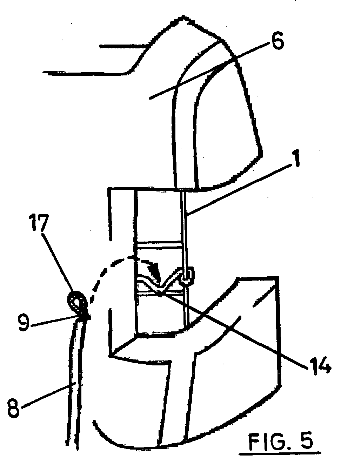

The upper end 17 of the piano strings is attached to the bends 14 of the rod 12 as shown in Figure 5.

The configuration of the rod 12 allows it to have certain flexibility, thus facilitating its assembly between the longitudinal sides of the frame 2 of the framework.

When the user compresses the backrest, the piano string pulls on the bends 14 of the rod 12 causing a certain swinging thereof which will cause the lifting of the elastically deformable body 6, thus keeping the upholstery 7 taut.

## Claims

1. A seat for automotive vehicles comprising a seat body and a backrest body, both linked by means of a mechanism allowing adjusting the angle formed by both components, each one of them being made up of a framework (1) based on flexible rods (3), a rigid structure (5) coupled to the framework (1), an elastically deformable body (6) made from high density foam and a cover (7) covering said body, which cover (7) has a sheath (8) fixed to it which can be coupled in a groove (11) of the elastically deformable body through which a piano string (9) passes which is fixed to the backrest and to said framework (1), **characterised in that** the framework (1) has an independent transverse rod (12) assembled on its upper portion, which rod is bent in a C-shape, the side branches (13) of which symmetrically extend outwards in sections forming an approximately 180° bend (14) and are finished in an end hook (16) through which the rod (12) is connected to the two longitudinal sides of the frame (2) of the framework (1), whereas the bends (14) of both branches are connected to the ends of the piano string (9), the bends (14) and hooks (16) being coplanar with the C-shape.
